# EUROPÄISCHE PATENTSCHRIFT

(11) **EP 1 219 846 B1**
(45) Veröffentlichungstag und Bekanntmachung des Hinweises auf die Patenterteilung: **06.05.2004**
(21) Anmeldenummer: 01127988.2
(22) Anmeldetag: 24.11.2001
(51) Int. Cl.: F16D 13/00

(54) **Verfahren zum Rückstellen einer elektromechanischen Axialverstellvorrichtung**
Method for resetting an elektromechanical device for axial displacement
Méthode pour remettre en place un dispositif électromécanique à déplacement axiale

(30) Priorität: 27.12.2000 DE 10065356
(43) Veröffentlichungstag der Anmeldung: 03.07.2002
(73) Patentinhaber: GKN Automotive GmbH, 53797 Lohmar (DE)
(72) Erfinder: Nestler, Frank, Dipl.-Ing., 53225 Bonn (DE)
(74) Vertreter: Neumann, Ernst Dieter, Dipl.-Ing.

(56) Entgegenhaltungen:
- DE-A- 3 915 959
- DE-A- 3 920 861

## Beschreibung

Die Erfindung betrifft ein Verfahren zum Rückstellen einer elektromechanischen Axialverstellvorrichtung, insbesondere für Reibungskupplungen, wobei die Axialverstellvorrichtung folgendes umfaßt:
zwei auf einer gemeinsamen Achse zentrierte Stellringe, von denen einer axial abgestützt und der andere axial verschiebbar gelagert ist und von denen einer verdrehgesichert in einem Gehäuse gehalten und der andere drehend antreibbar ist,
die beiden Stellringe weisen jeweils auf ihren einander zugewandten Stimflächen eine gleich große Mehrzahl von in Umfangsrichtung verlaufenden Rillen auf,
die Rillen haben jeweils in Aufsicht auf die Stirnflächen in gleicher Umfangsrichtung ansteigende Tiefe,
jeweils Paare von Rillen in den beiden Stellringen nehmen eine Kugel auf,
der drehend antreibbare Stellring ist mit einem Elektromotor antriebsmäßig gekoppelt,
der axial verstellbare Stellring wird von Druckfedern in Richtung auf den axial abgestützten Stellring beaufschlagt,
beim Anlegen einer positiven Spannung an den Elektromotor fährt die Axialverstellvorrichtung in eine Vorschubstellung,
beim Trennen der Spannung vom Elektromotor läuft die Axialverstellvorrichtung in eine Ausgangsstellung zurück.

Die Erfindung betrifft weiterhin eine elektromechanische Axialverstellvorrichtung zur Durchführung des Verfahrens.

Axialverstellvorrichtungen der genannten Art sind einfach aufgebaut, haben eine kompakte Bauweise und kurze Ansprechzeiten, wie sie z. B. für Reibungskupplungen in Sperrdifferentialen erforderlich sind. Anwendungen dieser Verstellvorrichtungen sind in DE 39 20 861 C2, DE 39 15 959 C2, DE 39 09 112 C2, DE 38 15 225 C2 und DE 100 33 482.2 beschrieben. Es ist dort bereits mehrfach darauf hingewiesen worden, daß zum Erreichen einer Kompatibilität der damit bestückten Sperrdifferentiale mit Fahrzeugen mit ABS-Systemen und/oder mit ESP-Systemen die Fähigkeit zur schnellen Rückstellung dieser Axialverstellvorrichtungen notwendig ist. Eine solche Rückstellung wird durch Rückstellfedern bewirkt, die entweder als Spiralfedern unmittelbar den verdrehten Stellring zurückdrehen und dadurch den axial verschobenen Stellring zurückkommen lassen oder die als Axialfedern bei selbsthemmungsfreien Rillenanordnungen den axial verschobenen Stellring zurückdrücken und dadurch den verdrehten Stellring zurückdrehen.

Zur Beschleunigung des Rückstellvorganges ist es bereits versucht worden, den Elektromotor zum Rückstellen mit einer negativen Spannung zu beaufschlagen. Die Ergebnisse dieses Rückstellverfahrens sind noch unbefriedigend und müssen für beschleunigte Regelzyklen weiter verbessert werden.

Das erfindungsgemäße Verfahren ist gekennzeichnet durch die Schritte:
zum Rückstellen wird zunächst eine negative Spannung am Elektromotor angelegt und
beim Erreichen der maschineneigenen Leerlaufdrehzahl des Elektromotors vor Erreichen der Ausgangsstellung wird der Elektromotor von der Spannung getrennt.

Durch die hiermit angegebene Regelstrategie kann ein erheblicher Zeitgewinn gegenüber dem einfachen passiven Rücklaufen durch Federkraft erzielt werden, indem insbesondere in der Beschleunigungsphase die Federkraft durch den elektromotorischen Antrieb unterstützt wird. Ein Zeitgewinn ergibt sich aber überraschenderweise ebenfalls gegenüber einer dauernd aufgeschalteten negativen Spannung während des Rücklaufens, die bei Überschreiten der Leerlaufdrehzahl durch die induzierte Gegenspannung in ihrer Wirkung konterkariert wird.

Eine erfindungsgemäße Vorrichtung muß eine Spannungsumkehrschaltung für den Elektromotor zum Rückstellen und eine Motordrehzahlerfassungsschaltung für den Elektromotor umfassen, die miteinander über die maschineneigene Leerlaufdrehzahl des Elektromotors derart logisch verschaltet sind, daß die Spannungsumkehrschaltung im Sinne einer Spannungsunterbrechung angesteuert wird, wenn beim Rückstellen der Vorrichtung die maschineneigene Leerlaufdrehzahl des Elektromotors vor Erreichen der Ausgangsstellung erreicht ist.

Um den Zeitpunkt des Unterbrechens der negativen Spannung am Elektromotor bestimmen zu können, sind entsprechende direkte Drehzahlüberwachungsmittel geeignet. Vereinfachend kann jedoch auch bei bekanntem dynamischen Verhalten der Axialverstellvorrichtung eine einfache Zeitschaltung das Aufschalten der negativen Spannung am Elektromotor beim Rückstellen zeitlich begrenzen.

Axialverstellvorrichtungen der genannten Art, insbesondere solche, die durch verstärkte Rückstellfedern bzw. durch Schaltungsanordnungen zur Spannungsumkehr auf einen schnellen Rücklauf für ein schnelles Trennen der Reibungskupplung ausgelegt sind, erfahren am Ende des Rücklaufes einen harten Stoß aufgrund des Anschlagens der Kugeln an den Rillenenden der Kugelrillen der Stellringe. Dieser Stoß ist derart heftig, daß er in Fahrzeugen als unzulässige Komfortbeeinträchtigung angesehen wird. Darüber hinaus führt er beim unvorbereiteten Fahrer zur Verunsicherung, da dieser den heftigen Stoß als Schadensfall deuten wird.

Hiervon ausgehend ist es notwendig, einen schnellen Rücklauf mit einem gedämpften Anschlagverhalten zu ermöglichen. Eine entsprechende Verbesserung bietet ein Verfahren, das dadurch gekennzeichnet ist, daß beim Rückstellen kurz vor Erreichen der Ausgangsstellung der Elektromotor zur Erzeugung eines Bremsmomentes kurzgeschlossen wird oder ein Verfahren, das dadurch gekennzeichnet ist, daß beim Rückstellen kurz vor Erreichen der Ausgangsstellung zur Erzeugung eines Bremsmomentes kurzzeitig eine positive Spannung am Elektromotor angelegt wird. Mit den hier angegebenen Mitteln wird somit am Ende des Rückstellvorgangs kurz vor Erreichen der Endanschläge durch die Kugeln ein Verfahren zum elektrischen Abbremsen zur Anwendung gebracht, das mit geringem zusätzlichen Schaltungsaufwand darzustellen ist, während die zugrundeliegende mechanische Konfiguration unverändert bleiben kann. Eine geeignete Vorrichtung umfaßt einen Drehstellungssensor, der an einem drehenden Teil, z. B. am ersten Stellring, in Position gebracht wird und der kurz vor Erreichen der Endanschläge in den Kugelrillen durch die Kugeln den entsprechenden Schaltvorgang einleitet, d. h. entweder eine Kurzschlußschaltung vornimmt oder eine positive Spannung aufschaltet. In einfacher Ausführung kann statt berührungsloser Sensormittel auch die Verwendung einfacher Schaltkontakte vorgesehen werden, die zunächst kurz vor Erreichen der Endanschläge die Kurzschlußschaltung bzw. die Spannungsverbindung bewirken und bei Erreichen der Endanschläge in den Kugelrillen durch die Kugeln den Elektromotor freischalten. Die genannten Mittel zur Dämpfung des Anschlages bzw. zur Abbremsung des rücklaufenden Elektromotors stellen einen wesentlich geringeren Aufwand dar, als es mechanische Bremsen und/oder Dämpfer erfordern würden.

Es findet vorzugsweise ein permanent erregter Gleichstrommotor Verwendung.

Ein bevorzugtes Ausführungsbeispiel der Erfindung ist in den Zeichnungen dargestellt und wird nachstehend erläutert.
- Figur 1: zeigt eine erfindungsgemäße Axialverstellvorrichtung in einer ersten Axialansicht;
- Figur 2: zeigt die Vorrichtung nach Figur 1 im Schnitt A-A;
- Figur 3: zeigt die Vorrichtung nach Figur 1 in axialer Gegenansicht zu Figur 1;
- Figur 4: zeigt die Vorrichtung nach Figur 1 im Schnitt B-B;
- Figur 5: zeigt die Vorrichtung in der Darstellung nach Figur 4, jedoch in Ansicht;
- Figur 6: zeigt einen drehend antreibbaren Stellring der Vorrichtung als Einzelheit in axialer Ansicht auf die Rillen;
- Figur 7: zeigt den Stellring nach Figur 6 im Schnitt A-A;
- Figur 8: zeigt einen Zylinderschnitt durch eine Rille in Vergrößerung;
- Figur 9: zeigt die Einzelheit X aus Figur 7;
- Figur 10: zeigt die Einzelheit Y aus Figur 7;
- Figur 11: zeigt den Stellring nach Figur 6 in einer perspektivischen Ansicht;
- Figur 12: zeigt den zweiten Stellring der Vorrichtung nach Figur 1 in Aufsicht auf die Stirnfläche mit den Rillen;
- Figur 13: zeigt den Stellring nach Figur 12 im Schnitt A-A;
- Figur 14: zeigt einen Zylinderschnitt durch eine Rille in Vergrößerung;
- Figur 15: zeigt den Schnitt B-B aus Figur 12;
- Figur 16: zeigt den Stellring nach Figur 12 in perspektivischer Schrägansicht;
- Figur 17: zeigt eine erfindungsgemäße Stellvorrichtung in Verwendung mit einem Differentialgetriebe in einem Teilschnitt;
- Figur 18: zeigt eine Anordnung nach Figur 17 im Axialschnitt;
- Figur 19: zeigt verschiedene Kenngrößen bei einer optimierten Freischaltstrategie;
- Figur 20: zeigt den Drehmomentverlauf für die erfindungsgemäße Freischaltstrategie in Verbindung mit bekannten Strategien;
- Figur 21: zeigt die Motordrehzahl über der Zeit für die erfindungsgemäße Freischaltstrategie nach Figur 20 im Vergleich mit Strategien nach dem Stand der Technik;
- Figur 22: zeigt die Kennlinien für den Drehmomentverlauf und für die Motordrehzahl über der Zeit für eine erfindungsgemäße Abbremsstrategie.

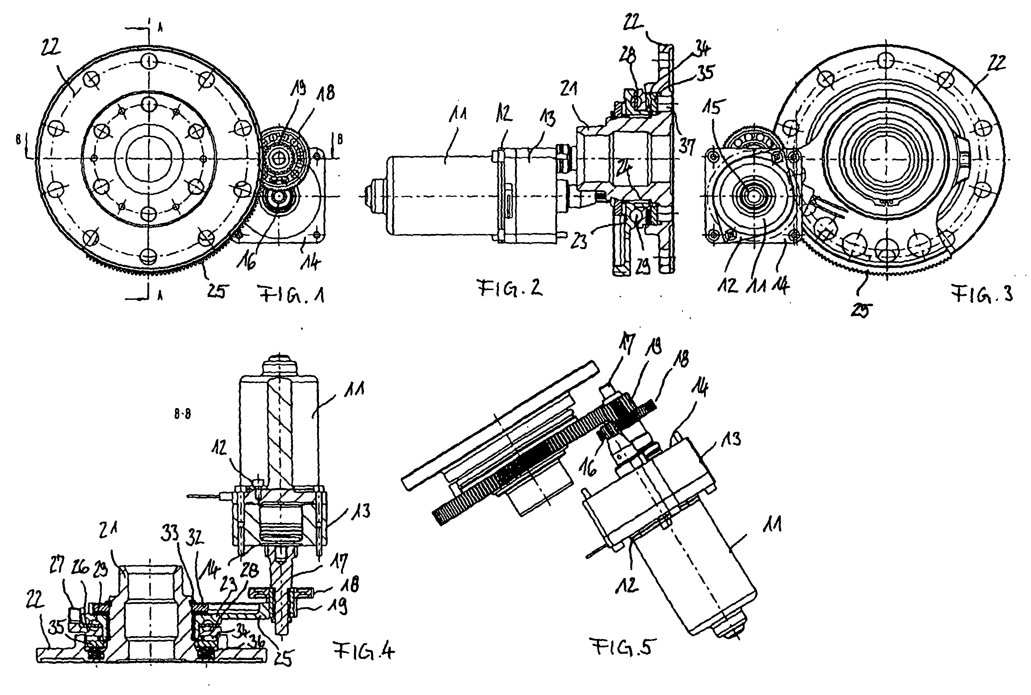

Die Figuren 1 bis 5 werden weitgehend gemeinsam beschrieben. Ein Elektromotor 11 ist mit einer ersten Flanschplatte 12 an einem Lagerblock 13 angeschraubt, der eine zweite Flanschplatte 14 bildet. In dem Lagerblock 13 ist eine Verlängerung der Motorwelle 15 gelagert, die ein erstes Ritzel 16 trägt. In dem Lagerblock 13 ist weiterhin eine Nebenwelle 17 gelagert, die ein weiteres Ritzel 18 trägt, das mit dem Ritzel 16 kämmt und zur Bildung einer Untersetzungsstufe ein weiteres Ritzel 19 trägt. Der Lagerblock 13 ist über den Lagerflansch 14 z. B. an einem Getriebegehäuse zu befestigen. Mit paralleler Achse zur Motorachse ist eine Lagerhülse 21 mit einer Flanschplatte 22 gezeigt, die in dem Getriebegehäuse drehbär gelagert sein kann. Auf der Lagerhülse 21 ist ein erster Stellring 23 mittels eines Radiallagers 24 gelagert. Der Stellring 23 umfaßt ein Zahnsegment 25. Das Ritzel 19 der Nebenwelle 17 ist im Verzahnungseingriff mit dem Zahnsegment 25 des ersten Stellrings 23. Parallel zum ersten Stellring 23 liegt ein weiterer Stellring 26, der mit einer Haltenase 27 mit dem Getriebegehäuse in verdrehfestem Eingriff sein kann. Zwischen den Stellringen 23, 26 befinden sich eine Mehrzahl von in einem Käfig 28 gehaltenen Kugeln 29, mittels derer der zweite Stellring 26 auf dem ersten Stellring 23 zentriert ist. Der erste Stellring 23 stützt sich über ein Axiallager 31 an einer Scheibe 32 ab, die mit einem Sicherungsring 33 auf der Lagerhülse 21 festgelegt ist. Der zweite Stellring stützt sich über ein Axiallager 34 an einer Druckplatte 35 ab, die über Tellerfederpakete 36 in der Flanschplatte 22 gehalten ist. Die Druckplatte 35 wirkt gleichzeitig auf Druckbolzen 37, die die Flanschplatte 22 durchdringen, ein. Kugelrillen in den Stellringen 23, 26, die die Kugeln 29 halten, sind als über dem Umfang entgegengesetzt steigende Rampen ausgeführt. Am Elektromotor sind Kabelanschlüsse 38, 39 erkennbar. Ein Antreiben des Elektromotors 11 verdreht das Zahnsegment 25 und damit den ersten Stellring 23 gegenüber dem zweiten über die Haltenase 27 mit dem Getriebegehäuse in Eingriff befindlichen Stellring 26, der hierdurch gegen die Rückstellkraft der Tellerfedern 36 axial verschoben wird und damit die Druckbolzen 37 beaufschlagt. Zur Funktion der Stellringe ergibt sich näheres aus den folgenden Zeichnungen.

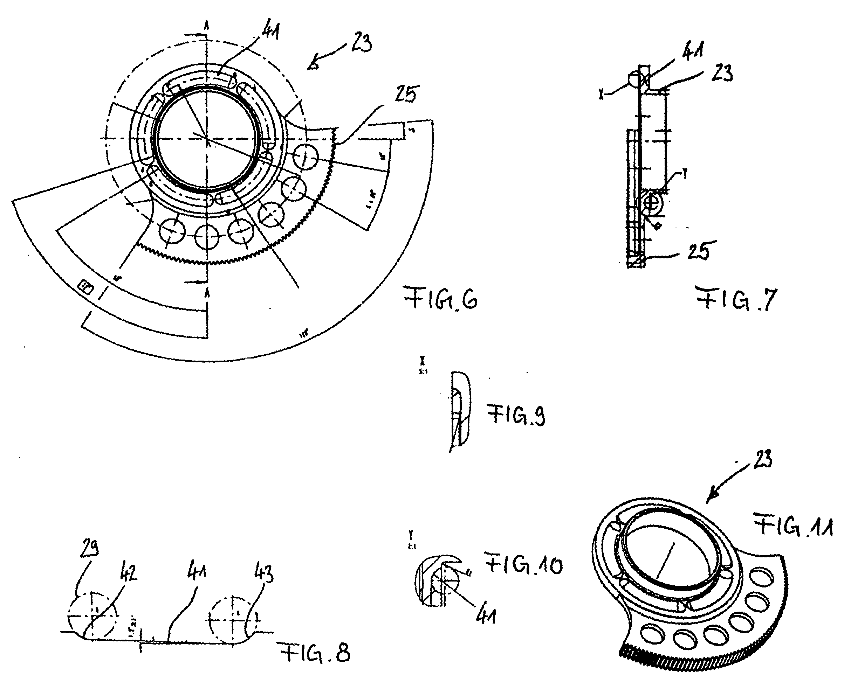

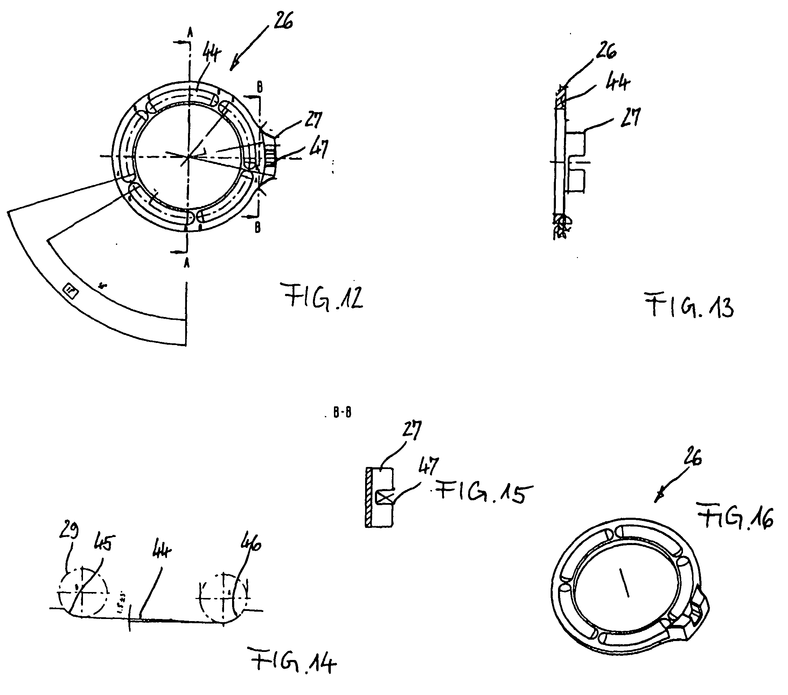

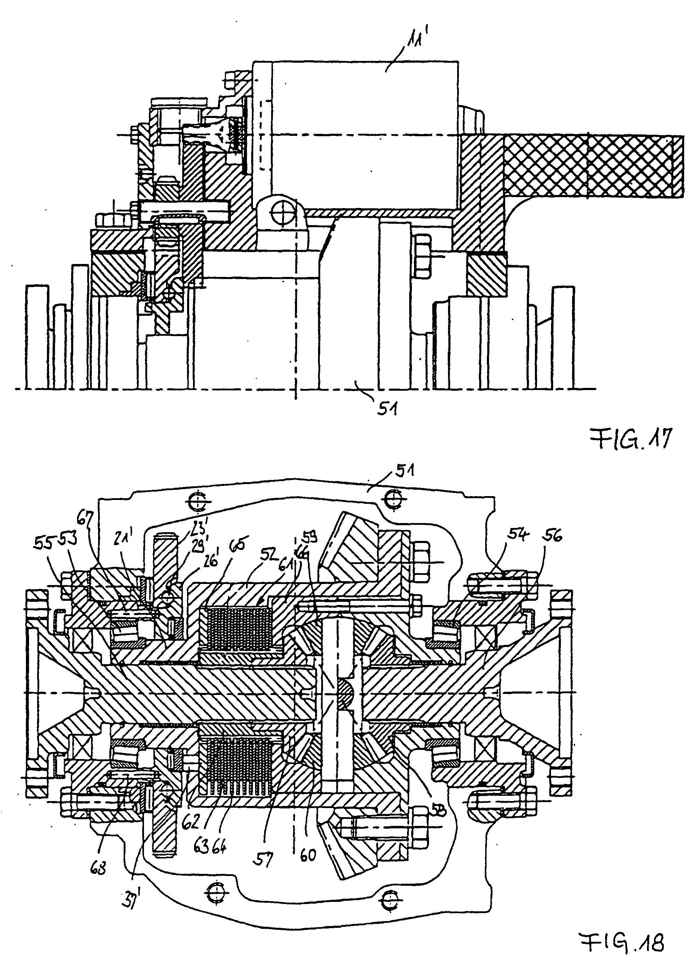

Die Figuren 6 bis 11 werden nachstehend gemeinsam beschrieben. Der erste Stellring 23 mit dem Zahnsegment 25 zeigt in seiner einen Stirnfläche fünf mit einem Teilungswinkel von 72° auf dem Umfang verteilte Kugelrillen 41 von jeweils 58° Umfangslänge. Wie in Figur 8 dargestellt ist, haben die Kugelrillen über ihrer Umfangserstreckung einen Steigungswinkel von 1,5° und damit eine veränderliche Tiefe zwischen zwei Anschlägen 42 und 43 für die Kugeln 29. In der geschnitten dargestellten Kugelrille ist die Kugel in ihren zwei Anschlagpositionen strichpunktiert gezeigt.

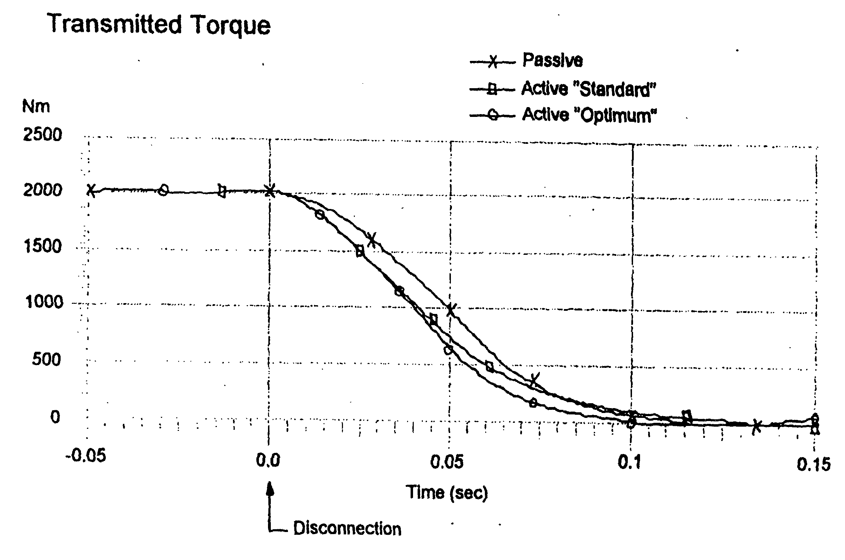

Die Figuren 12 bis 16 werden nachstehend gemeinsam beschrieben. Der zweite Stellring 26 weist in seiner Stirnfläche fünf Kugelrillen 44 auf, die mit einem Teilungswinkel von 72° über dem Umfang verteilt sind und eine Umfangslänge von 58° haben.

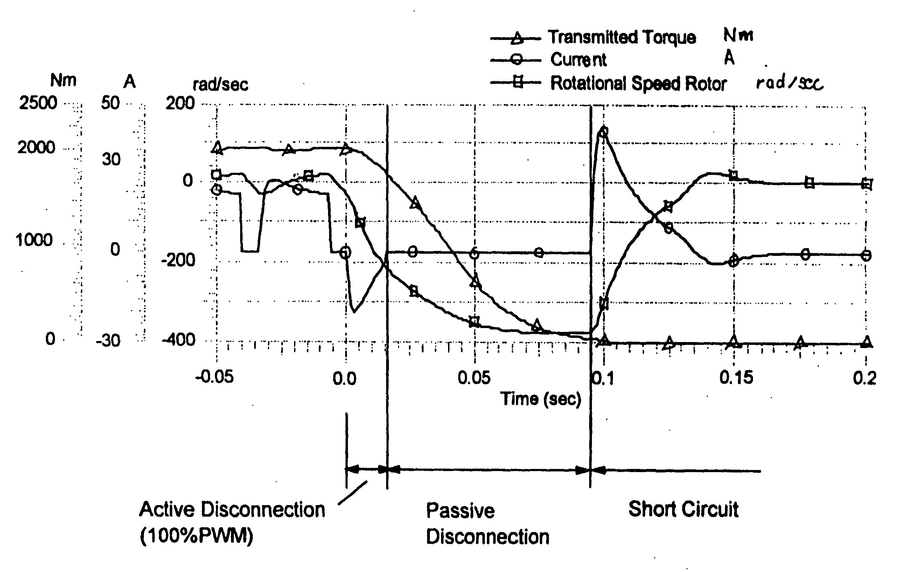

Die Haltenase 27 mit einer Führungsnut 47 ist besonders bezeichnet. Die Kugelrillen haben, wie in Figur 14 im einzelnen erkennbar ist, über dem Umfang eine veränderliche Tiefe aufgrund eines Steigungswinkels von 1,5° und weisen zwei Anschläge 45, 46 für die Kugeln 29 auf. Eine Kugel ist in ihren zwei Anschlagspositionen strichpunktiert dargestellt.

Die Steigungen der Kugelrillen 44 im zweiten Stellring 26 haben den gleichen Steigungssinn wie die Steigungen der Kugelrillen 41 im ersten Stellring 23. Da die Stellringe 23, 26 mit den die Kugelrillen 41, 44 enthaltenden Stirnflächen zueinander weisend montiert sind, läßt ein Relativverdrehung der beiden Stellringe zueinander eine Kugel 29 in beiden Kugelrillen 41, 44 gleichzeitig aufsteigend oder in beiden Kugelrillen 41, 44 gleichzeitig absteigend abrollen. Der Käfig hält die Kugeln in untereinander übereinstimmenden Positionen in den Kugelrillen. Eine Relativverdrehung der beiden Stellringe 23, 26 zueinander in einer ersten Richtung drückt diese damit auseinander, während eine Relativverdrehung in die entgegengesetzte Richtung diese sich aneinander annähern läßt. Ersteres wird ausschließlich durch ein Antreiben des Elektromotors bewirkt; letzteres wird insbesondere durch die Rückstellkraft der Tellerfedern 36 veranlaßt.

Die Figuren 17 und 18 werden nachfolgend gemeinsam beschrieben. Eine Verstellvorrichtung der vorgenannten Art ist an einem Differentialgetriebe installiert, das ein Getriebegehäuse 51 aufweist. Die Lagerhülse 21' ist in diesem Fall einstückig mit einem Differentialkorb 52 ausgebildet, der im Differentialgetriebe über Wälzlager 53, 54 drehbar gelagert ist. Im Differentialkorb 52 sind zwei Achswellen 55, 56 gelagert, die Kegelräder 57, 58 tragen. Die Kegelräder sind mit Ausgleichskegelrädern 59, 60 im Eingriff. Eine Reibungskupplung 61 umfaßt erste Reiblamellen 63, die drehfest mit einer Hülse 62 verbunden sind, die auf der Achswelle 55 festgelegt ist, sowie zweite. Reiblamellen 64, die mit dem Differentialkorb 52 drehfest verbunden sind. Die Reibungskupplung 61 ist zwischen einer axialverschieblichen Druckplatte 65 und einem im Differentialkorb 52 festliegenden Stützkörper 66 angeordnet. Die Druckplatte 65 ist unmittelbar durch die Druckbolzen 37' beaufschlagbar, die bei einer Verdrehung des ersten Stellrings 23' gegenüber dem zweiten Stellring 26' verschoben werden. Der zweite Stellring 26' ist über in Haltenasen 27 eingreifende Stifte 67, 68 drehfest gehalten, die im Differentialgetriebegehäuse 51 festgelegt sind. Durch Verdrehen des Stellrings 23 in eine erste Richtung wird die Reibungskupplung 61 geschlossen, so daß das Differentialgetriebe eine Sperrwirkung entfaltet, während durch Rückdrehen des Stellrings 23 ein Freistellen der Reibungskupplung 61 bewirkt wird, so daß das Differentialgetriebe wieder zum offenen Differential wird.

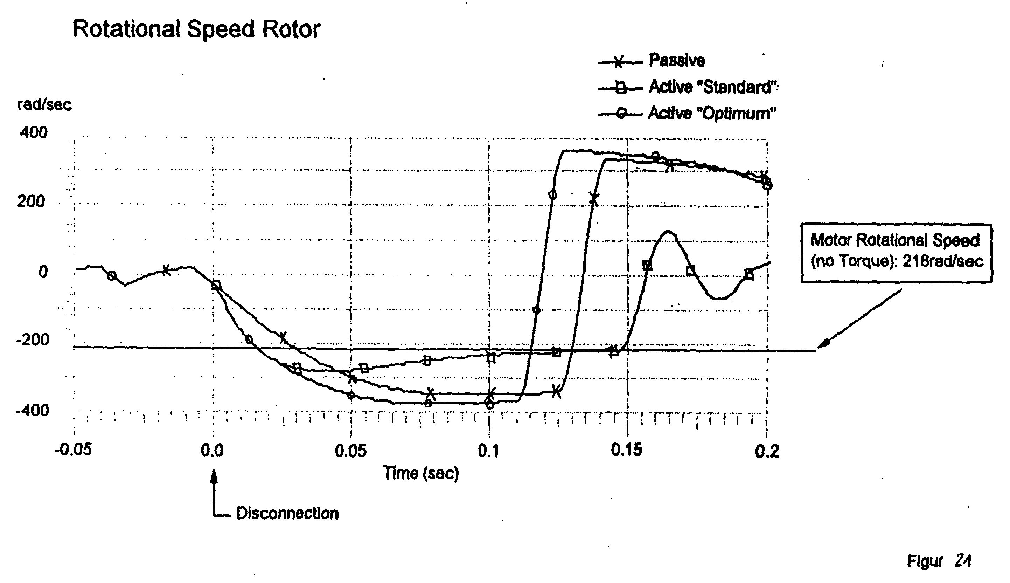

In Figur 19 ist der vorstehend genannte Vorgang des Freischaltens einer Reibungskupplung anhand verschiedener Kenngrößen auf einer Zeitachse dargestellt. Es sind dies das von der Reibungskupplung übertragbare Drehmoment (transmitted torque), der Strom (current) im Elektromotor und dessen Drehgeschwindigkeit (rotational speed rotor). Im Bereich negativer Zeiten ist der Zustand der Verstellvorrichtung in der äußersten Vorschubstellung dargestellt. Von der Zeit 0,0 beginnend wird die Verstellvorrichtung schnellstmöglich und unter Vermeidung von Anschlagstößen in die Ausgangsstellung zurückgefahren. Im Bereich der negativen Zeiten ist der Strom pulsweitenmoduliert mit Rechtecksprüngen zwischen 0 und ca. 25 A charakterisiert. Das von der Reibungskupplung übertragbare Drehmoment liegt konstant bei nahezu 2000 Nm. Die Motordrehzahl des Elektromotors schwankt mit der Frequenz der Pulsweitenmodulation nahe um 0.

Zur Zeit 0,0 wird der Elektromotor negativ bestromt (Active Disconnection), wodurch die Motordrehzahl auf negative rückdrehende Werte hochläuft und das übertragbare Drehmoment durch Öffnen der Reibungskupplung abnimmt. Nach einer Zeit von ca. 0,01 Sekunden wird der Strom ausgeschaltet, so daß bei der Zeit von 0,015 Sekunden der Strom im Elektromotor 0 wird. Das Abschalten des Stroms (Passive Disconnection) ist so gewählt, daß der Elektromotor etwa nach dieser Zeit mit ca. 200 rad./sek seine Nenndrehzahl erreicht, so daß die Drehzahl danach durch die Einwirkung der Tellerfedern weiter rücklaufend ansteigen kann, ohne daß dieses Ansteigen durch die Induzierung einer Gegenspannung im Elektromotor abgebremst wird. Das übertragbare Drehmoment fällt hierbei bis zu einer Zeit von 0,095 Sekunden weiter ab. Bei dieser Zeit wird der Elektromotor kurzgeschlossen (short circuit), so daß ein Kurzschlußstrom innerhalb kürzester Zeit einen Wert von ca. 45 A erreicht. Hierdurch wird die Drehzahl des Motors bis zur Zeit von 0,14 Sekunden wieder auf 0 abgebremst, wobei ein nur geringes Überschwingen erfolgt. Das übertragbare Drehmoment hat bereits vorher den Wert 0 erreicht. Aufgrund des elektromotorischen Abbremsvorganges ist der Anschlag der Kugeln in den Rillenanschlägen vollkommen stoßfrei.

In Figur 20 ist der Drehmomentverlauf der Reibungskupplung (Transmitted Torque) über der Zeitachse als Folge des erfindungsgemäßen Unterbrechens der Negativbestromung (active "Optimum") im Vergleich mit einer dauernden Negativbestromung (active "Standard") und dem Zurücklaufen ausschließlich unter Federkraft (Passive) dargestellt. Hierbei wird das Zurücklaufen unter Federkraft mit "passive" bezeichnet, das erkennbar den langsamsten Abbau des übertragbaren Drehmomentes bewirkt. Mit "active Standard" wird eine dauernd negative Bestromung des Elektromotors bezeichnet, die durch die Induzierung einer Innenspannung ab ca. 0,04 Sekunden zu einem deutlich verlangsamten Abbau des übertragbaren Drehmoments führt, während mit "active Optimum" eine negative Bestromung angedeutet ist, die bereits bei Erreichen der Leerlaufdrehzahl nach ca. 0,04 Sekunden wieder unterbrochen wird, so daß ein schnellstmöglicher Abstieg des übertragbaren Drehmomentes erfolgt.

In Figur 21 sind für die drei im Zusammenhang mit Figur 20 beschriebenen Freischaltungsarten die Verläufe der Rückstelldrehzahlen des Elektromotors (Rotational Speed Rotor) über der Zeitachse gezeigt. Die zeitliche Spreizung der Drehzahlanstiege ist hierbei ursachlich für die vorgenannten Drehmomentabfälle, wobei sich die Drehzahl 0 bei Erreichen der Endanschläge der Kugelrillen einstellt. Dies findet bei der dauernden Negativbestromung (active Standard) am spätesten und insbesondere deutlich später statt als bei dem freien Rücklauf (passive), während das kurze negative Bestromen ("active Optimum") gemäß der erfindungsgemäßen Verfahrensart zum schnellsten Erreichen des Anschlages führt, das durch den Nulldurchgang der Drehzahlkurve bei gleichzeitigem Überschwingen charakterisiert ist. Dieses Überschwingen bezeichnet Rückdrehen des Motors infolge eines stoßartigen Rückfederns am Endanschlag der Kugelrillen.

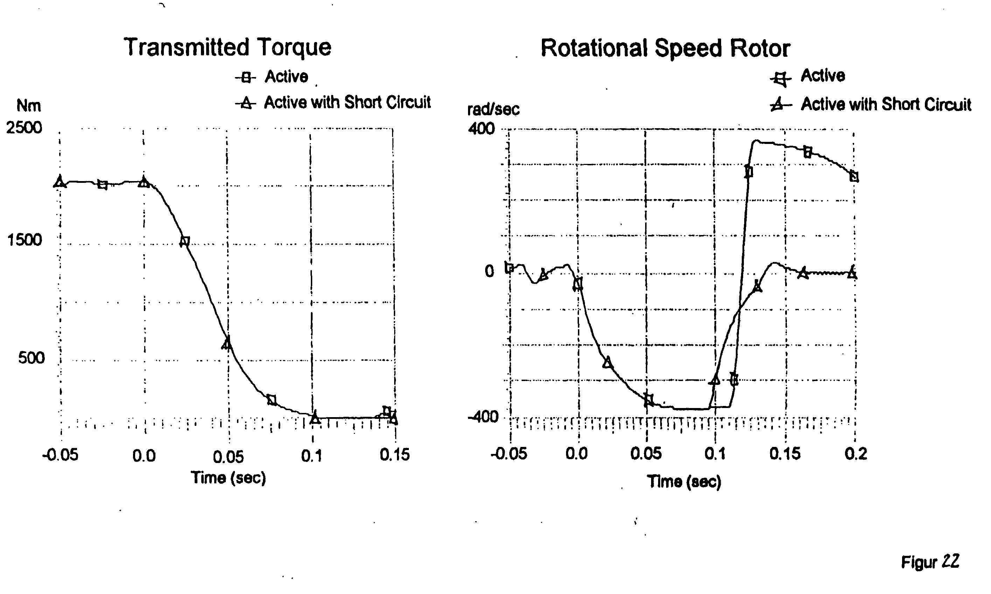

In Figur 22 sind zwei den. Figuren 20 und 21, nämlich Darstellung des übertragbaren Drehmomentes (Transmitted Torque) und Darstellung der Motordrehzahl bei Rückstellung (Rotational Speed Rotor), für einen weiteren vorteilhaften Steuerungsvorgang gezeigt, der sich unmittelbar vor dem Erreichen der Endanschläge der Kugelrillen durch die Kugeln abspielt.

Mit den Kurven "active" ist der Verlauf von Drehmoment und Drehzahl als Folge des kurzen negativen Bestromens gemäß der Verfahrensart "active Optimum" nach den Figuren 20 und 21 wiedergegeben. Hierbei ist gemäß der Kurve "active" das steile Abfallen der rückdrehenden negativen Motordrehzahl auf 0 und das Überschwingen auf eine deutlich positive Drehzahl beim harten Anschlagen der Kugeln in den Kugelrillen erkennbar. Mit der Kurve "active with short circuit" ist der Verlauf von Drehmoment und Drehzahl unter Einwirkung eines kurz vor Erreichen dieses Anschlages erfolgenden Kurzschließens des Elektromotors gezeigt, mit dem ein rechtzeitiges Abbremsen des Motors bewirkt wird, so daß die Drehzahl praktisch stoßfrei auf 0 zurückgeführt wird. Das unerwünschte harte Anschlagen der Kugeln am Ende der Kugelrillen wird hiermit vermieden.

### Bezugszeichenliste

- 11: Motor
- 12: Motorflansch (2 Loch)
- 13: Lagerblock
- 14: Lagerflansch (4 Loch)
- 15: Motorwelle
- 16: Ritzel (15)
- 17: Nebenwelle
- 18: Ritzel (17)
- 19: Ritzel (17)
- 20 21: Lagerhülse
- 22: Flanschplatte
- 23: erster Stellring
- 24: Radiallager
- 25: Zahnsegment
- 26: Zweiter Stellring
- 27: Haltenase
- 28: Käfig
- 29: Kugeln
- 30 31: Axiallager
- 32: Scheibe
- 33: Sicherungsring
- 34: Axiallager
- 35: Druckplatte
- 36: Tellerfeder
- 37: Druckbolzen
- 38: Kabel
- 39: Kabel
- 40 41: Kugelrille
- 42: Anschlag
- 43: Anschlag
- 44: Kugelrille
- 45: Anschlag
- 46: Anschlag
- 47: Führungsnut
- 51: Differentialgetriebegehäuse
- 52: Differentialkorb
- 53: Wälzläger
- 54: Wälzläger
- 55: Achswelle
- 56: Achswelle
- 57: Kegelrad
- 58: Kegelrad
- 59: Ausgleichskegelrad
- 60: Ausgleichskegelrad
- 61: Reiblamellenanordnung
- 62: Hülse
- 63: Reiblamellen
- 64: Reiblamellen
- 65: Druckplatte
- 66: Stützkörper
- 67: Stift
- 68: Stift

## Patentansprüche

1. Verfahren zum Rückstellen einer elektromechanischen Axialverstellvorrichtung, insbesondere für Reibungskupplungen, wobei die Axialverstellvorrichtung folgendes umfaßt:
zwei auf einer gemeinsamen Achse zentrierte Stellringe (23, 26),
von denen einer axial abgestützt und der andere axial verschiebbar gelagert ist und von denen einer verdrehgesichert in einem Gehäuse gehalten und der andere drehend antreibbar ist,
die beiden Stellringe (23, 26) weisen jeweils auf ihren einander zugewandten Stirnflächen eine gleich große Mehrzahl von in Umfangsrichtung verlaufenden Rillen (41, 44) auf,
die Rillen (41, 44) haben jeweils in Aufsicht auf die Stirnflächen in gleicher Umfangsrichtung ansteigende Tiefe,
jeweils Paare von Rillen (41, 44) in den beiden Stellringen (23, 26) nehmen eine Kugel (29) auf,
der drehend antreibbare Stellring (23) ist mit einem Elektromotor (11) antriebsmäßig gekoppelt,
der axial verstellbare Stellring (26) wird von Druckfedern (37) in Richtung auf den axial abgestützten Stellring (23) beaufschlagt,
beim Anlegen einer positiven Spannung an den Elektromotor (11) fährt die Axialverstellvorrichtung in eine Vorschubstellung,
beim Trennen der Spannung vom Elektromotor läuft die Axialverstellvorrichtung in eine Ausgangsstellung zurück,
**gekennzeichnet durch** die Schritte:
zum Rückstellen wird zunächst eine negative Spannung am Elektromotor (11) angelegt und
beim Erreichen der maschineneigenen Leerlaufdrehzahl des Elektromotors vor Erreichen der Ausgangsstellung wird der Elektromotor (11) von der Spannung getrennt.

2. Verfahren nach Anspruch 1,
**dadurch gekennzeichnet,**
**daß** beim Rückstellen nach dem Stromlossetzen kurz vor Erreichen der Ausgangsstellung der Elektromotor zur Erzeugung eines Bremsmomentes kurzgeschlossen wird.

3. Verfahren nach Anspruch 1,
**dadurch gekennzeichnet,**
**daß** beim Rückstellen nach dem Stromlossetzen kurz vor Erreichen der Ausgangsstellung zur Erzeugung eines Bremsmomentes kurzzeitig eine positive Spannung am Elektromotor angelegt wird.

4. Verfahren nach einem der Ansprüche 2 oder 3,
**dadurch gekennzeichnet,**
**daß** beim Rückstellen spätestens mit Erreichen der Ausgangsstellung der Axialverstellvorrichtung die Kurzschlußschaltung bzw. die positive Spannungsverbindung am Elektromotor aufgehoben/getrennt wird.

5. Elektromechanische Axialverstellvorrichtung, insbesondere für Reibungskupplungen, zur Durchführung eines Verfahrens nach einem der Ansprüche 1 bis 5, wobei die Axialverstellvorrichtung folgendes umfaßt:
zwei auf einer gemeinsamen Achse zentrierte Stellringe (23, 26) von denen einer axial abgestützt und der andere axial verschiebbar gelagert ist und von denen einer verdrehgesichert in einem Gehäuse gehalten und der andere drehend antreibbar ist,
die beiden Stellringe (23, 26) weisen jeweils auf ihren einander zugewandten Stirnflächen eine gleich große Mehrzahl von in Umfangsrichtung verlaufenden Rillen (41, 44) auf,
die Rillen (41, 44) haben jeweils in Aufsicht auf die Stirnflächen in gleicher Umfangsrichtung ansteigende Tiefe,
jeweils Paare von Rillen (41, 44) in den beiden Stellringen (23, 26) nehmen eine Kugel (29) auf,
der drehend antreibbare Stellring (23) ist mit einem Elektromotor (11) antriebsmäßig gekoppelt,
der axial verstellbare Stellring (26) wird von Druckfedern (37) in Richtung auf den axial abgestützten Stellring (23)
beaufschlagt,
**gekennzeichnet durch**
eine Spannungsumkehrschaltung für den Elektromotor zum Rückstellen und eine Motordrehzahlerfassungsschaltung für den Elektromotor, die miteinander über die maschineneigene Leerlaufdrehzahl des Elektromotors im Sinne einer Spannungsunterbrechung an der Spannungsumkehrschaltung bei Erreichen der maschineneigenen Leerlaufdrehzahl vor Erreichen der Ausgangsstellung logisch verschaltet sind.

6. Axialverstellvorrichtung nach Anspruch 5,
**gekennzeichnet durch**
einen Drehstellungsaufnehmer an einem drehenden Teil der Axialverstellvorrichtung zur Ansteuerung einer Kurzschlußschaltanordnung für den Elektromotor beim Rückstellen kurz vor Erreichen der Ausgangsstellung.

7. Axialverstellvorrichtung nach Anspruch 5,
**gekennzeichnet durch**
einen Drehstellungsaufnehmer an einem drehenden Teil der Axialverstellvorrichtung zur Ansteuerung einer Spannungsverbindungsschaltung für den Elektromotor beim Rückstellen kurz vor Erreichen der Ausgangsstellung.

8. Axialverstellvorrichtung nach einem der Ansprüche 5 bis 7,
**gekennzeichnet durch**
einen Drehstellungsaufnehmer zur Unterbrechung der Spannungsverbindungs- bzw. Kurzschlußschaltungen des Elektromotors bei Erreichen eines Drehanschlages der Axialverstellvorrichtung in der Ausgangsstellung.

## Claims

1. A method of resetting an electromechanical device for axial displacement, more particularly for friction couplings, wherein the device for axial displacement comprises the following:
two setting rings (23, 26) centred on a common axis,
one of which is axially supported and the other one axially displaceable and one of which is held in a housing so as to be rotationally secured and the other one is rotatingly drivable,
the two setting rings (23, 26), on their front surfaces facing one another, comprise identical numbers of circumferentially extending grooves (41, 44),
the grooves (41, 44), in a plan view of the front surfaces, comprise a depth which rises in the same circumferential direction,
each pair of grooves (41, 44) in the two setting rings (23, 26) accommodates a ball (29),
the rotatingly drivable setting ring (23), in respect of drive, is connected to an electric motor (11),
the axially displaceable setting ring (26) is loaded by pressure springs (37) towards the axially supported setting ring (23),
when a positive voltage is applied to the electric motor (11), the device for axial displacement moves into an advanced position,
when disconnecting the electric motor from the voltage, the device for axial displacement returns into a starting position,
**characterised by** the following stages:
for resetting purposes, first a negative voltage is applied to the electric motor (11) and
when the electric motor reaches its own no-load speed prior to reaching the starting position, the electric motor (11) is disconnected from the voltage.

2. A method according to claim 1,
**characterised in**
**that** during the resetting operation, after disconnection, shortly before the starting position is reached, the electric motor is short-circuited for the purpose of generating a braking moment.

3. A method according to claim 1,
**characterised in**
**that** during the resetting operation, after disconnection, shortly before the starting position is reached, for the purpose of generating a braking moment, a positive voltage is briefly applied to the electric motor.

4. A method according to any one of claims 2 or 3,
**characterised in**
**that** during the resetting operation, when the device for axial displacement reaches the starting position, short-circuiting or the application of a positive voltage to the electric motor is discontinued.

5. An electromechanical device for axial displacement, more particularly for friction couplings, for carrying out a method according to any one of claims 1 to 5, wherein the device for axial displacement comprises the following:
two setting rings (23, 26) centred on a common axis,
one of which is axially supported and the other one axially displaceable and one of which is held in a housing so as to be rotationally secured and the other one is rotatingly drivable,
the two setting rings (23, 26), on their front surfaces facing one another comprise an identical number of circumferentially extending grooves (41, 44),
the grooves (41, 44), in a plan view of the front surfaces, comprise a depth which rises in the same circumferential direction,
each pair of grooves (41, 44) in the two setting rings (23, 26) accommodates a ball (29),
the rotatingly drivable setting ring (23), in respect of drive, is connected to an electric motor (11),
the axially displaceable setting ring (26) is loaded by pressure springs (37) towards the axially supported setting ring (23),
**characterised by**
a voltage reversing circuit for the electric motor provided for resetting purposes and a motor speed recording circuit for the electric motor which are logically connected to one another via the no-load speed of the electric motor in the sense of a voltage interruption in the voltage reversing circuit when the electric motor reaches its own no-load speed prior to reaching the starting position.

6. A device for axial displacement according to claim 5,
**characterised by**
a rotational position recording device provided at a rotating part of the device for axial displacement for controlling a short-circuiting device for the electric motor during the resetting operation shortly before the starting position is reached.

7. A device for axial displacement according to claim 5,
**characterised by**
a rotational position recording device provided at a rotating part of the device for axial displacement for controlling a voltage connecting circuit for the electric motor during the resetting operation shortly before the starting position is reached.

8. A device for axial displacement according to any one of claims 5 to 7,
**characterised by**
a rotational position recording device for interrupting the voltage connecting and short-circuiting devices of the electric motor when the device for axial displacement reaches a rotational stop in the starting position.

## Revendications

1. Procédé de repositionnement d'un dispositif électromécanique de réglage axial, notamment pour des embrayages à friction, le dispositif de réglage axial comprenant ce qui suit:
deux bagues de réglage (23, 26) centrées sur un axe commun, dont l'une est supportée axialement et dont l'autre est montée de manière à être déplaçable axialement, et dont l'une est retenue d'une manière bloquée en rotation dans un boîtier et dont l'autre peut être entraînée en rotation, et les deux bagues de réglage (23, 26) possèdent respectivement sur leurs faces frontales qui se font face, une multiplicité identiques de rainures (41, 44) qui s'étendent dans la direction circonférentielle,
les rainures (41, 44) possèdent, respectivement selon une vue en plan des faces frontales, une profondeur qui augmente dans la même direction circonférentielle,
respectivement des couples de rainures (41, 44) dans les deux bagues de réglage (23, 26) reçoivent une bille (29),
la bague de réglage (23) pouvant être entraînée en rotation est couplée selon une liaison motrice à un moteur électrique (11),
la bague de réglage déplaçable axialement (26) est chargée par des ressorts de pression (37) en direction de la bague de réglage (23) supportée axialement,
lors de l'application d'une tension positive au moteur électrique (11), le dispositif de réglage axial vient dans une position d'avance,
lors de l'interruption de l'application de la tension au moteur électrique, le dispositif de réglage axial revient dans une position de départ,
**caractérisé par** les étapes consistant en ce que:
pour le repositionnement, on applique tout d'abord une tension négative au moteur électrique (11), et
lorsque la vitesse de rotation à vide, propre à la machine, du moteur électrique est atteinte et avant que la position de départ soit atteinte, la tension appliquée au moteur électrique (11) est supprimée.

2. Procédé selon la revendication 1, **caractérisé en ce**
**que** lors du repositionnement, après la suppression du courant, peu avant que la position de départ soit atteinte, le moteur électrique est court-circuité pour l'obtention d'un couple de freinage.

3. Procédé selon la revendication 1, **caractérisé en ce**
**que** lors du repositionnement, après l'interruption du courant, peu avant que la position de départ soit atteinte, une tension positive est appliquée au moteur électrique pendant un bref intervalle de temps pour l'obtention d'un couple de freinage.

4. Procédé selon l'une des revendications 2 ou 3, **caractérisé en ce**
**que** lors du repositionnement, au plus tard lorsque la position de départ du dispositif de réglage axial est atteinte, le court-circuitage ou l'application de la tension positive au moteur électrique est suspendu /interrompu.

5. Dispositif électromécanique de réglage axial, notamment pour des embrayages à friction, pour la mise en oeuvre d'un procédé selon les revendications 1 à 5, dans lequel le dispositif de réglage axial comprend ce qui suit:
deux bagues de réglage (23, 26) centrées sur un axe commun, dont l'une est supportée axialement et dont l'autre est montée de manière à être déplaçable axialement, et dont l'une est retenue d'une manière bloquée en rotation dans un boîtier et dont l'autre peut être entraînée en rotation, et
dans lequel les deux bagues de réglage (23, 26) possèdent respectivement sur leurs faces frontales qui se font face, une multiplicité identiques de rainures (41, 44) qui s'étendent dans la direction circonférentielle,
les rainures (41, 44) possèdent, respectivement selon une vue en plan des faces frontales, une profondeur qui augmente dans la même direction circonférentielle,
respectivement des couples de rainures (41, 44) dans les deux bagues de réglage (23, 26) reçoivent une bille (29),
la bague de réglage (23) pouvant être entraînée en rotation est couplée selon une liaison motrice à un moteur électrique (11),
la bague de réglage déplaçable axialement (26) est chargée par des ressorts de pression (37) en direction de la bague de réglage (23) supportée axialement,
**caractérisé par**
un circuit d'inversion de tension pour le moteur électrique pour le repositionnement et un circuit de détection de la vitesse de rotation du moteur pour le moteur électrique, qui sont connectés entre eux logiquement par l'intermédiaire de la vitesse de rotation à vide, propre à la machine, du moteur électrique dans le sens d'une interruption de la tension aux bornes du circuit d'inversion de tension lorsque la vitesse de rotation à vide, propre à la machine, est atteinte, avant que la position de départ soit atteinte.

6. Dispositif de réglage axial selon la revendication 5, **caractérisé par**
un enregistreur de la position de rotation situé sur une partie tournante du dispositif de réglage axial pour la commande d'un dispositif de court-circuit pour le moteur électrique lors du repositionnement, peu avant que la position de départ soit atteinte.

7. Dispositif de réglage axial selon la revendication 5, **caractérisé par**
un enregistreur de la position de rotation situé sur une partie tournante du dispositif de réglage axial pour la commande d'un circuit d'application de tension pour le moteur électrique lors du repositionnement, peu avant que la position de départ soit atteinte.

8. Dispositif de réglage axial selon l'une des revendications 5 à 7, **caractérisé par**
un enregistreur de la position de rotation servant à interrompre les circuits d'application de tension et de court-circuit du moteur électrique, lorsqu'une butée de rotation du dispositif de réglage axial est atteinte dans la position de départ.
